# EUROPEAN PATENT APPLICATION

(11) **EP 3 511 067 A1**
(43) Date of publication of application: **17.07.2019**
(21) Application number: 19151203.7
(22) Date of filing: 10.01.2019
(51) Int. Cl.: B01D 35/143, B01D 46/00, B01D 46/42

(54) **CUSTOM FILTER CLEANING ROUTINES FOR EXTRACTION SYSTEMS**

(30) Priority: 10.01.2018 US 201815866715
(71) Applicant: Lincoln Global, Inc., Santa Fe Springs, CA 90670 (US)
(72) Inventor: Silvestro, Nino, Independence, OH 44131 (US)
(74) Representative: Grosse Schumacher Knauer von Hirschhausen

(57) **Abstract**

Custom cleaning routines for filters (114, 200) in a fume extraction system can be implemented based on automatic identification of filters (114, 200). A filter (114, 200) can be associated with a tag (208, 506) that can be read or scanned to identify the filter (114, 200) upon installation within a dust collector (100) of the fume extraction system. A cleaning routine (662) for the filter (114, 200) can be selected based on information regarding the filter (114, 200) as well as historical data determined through evaluation of collected operational data.

## Description

### FIELD OF THE INVENTION

The invention is related to a dust collector according to claim 1, to method for a dust collector according to claim 9 and to a non-transitory, computer-readable storage medium according to claim 13. In general, the present invention relates to dust collectors and, in particular, customizable cleaning routines for air filters used in dust collectors.

### TECHNICAL BACKGROUND

A dust collector can be installed as a component in a fume extraction system. Some industrial processes, for example welding, hardfacing, or plasma cutting, can generate fumes and dust. The fume extraction system can remove the fumes and dust from a space (e.g., a work area). Prior to discharging removed air to another space or outdoors, the air passes through the dust collector. The dust collector is an enclosure containing air filters for removing solid contaminants entrained in the air drawn through the dust collector. Typically, contaminated air enters at a first compartment of the dust collector housing the air filters. The air filters capture the contaminants and allow clean air to pass into a second compartment of the dust collector. The clean air can then be directed to an appropriate discharge location from the second compartment.

After a period of use, the air filters are typically replaced. To extend a service time of filters before replacement, some dust collectors are configured to periodically clean the filters. For instance, contaminants collected on exterior surfaces of the air filters can be dislodged so as to fall into a collection bin for disposal.

### DESCRIPTION

In order to improve dust handling, especially with respect to maintenance and safety aspects, a dust collector according to claim 1 is described and a method for a dust collector according to claim 9 and a non-transitory, computer-readable storage medium according to claim 13. Preferred embodiments are subject of the subclaims. The following summary presents a simplified summary in order to provide a basic understanding of some aspects of the (devices, systems and/or methods) discussed herein. This summary is not an extensive overview of the (devices, systems and/or methods) discussed herein. It is not intended to identify critical elements or to delineate the scope of such (devices, systems and/or methods). Its sole purpose is to present some concepts in a simplified form as a prelude to the more detailed description that is presented later.

In accordance with one aspect, a dust collector having a tube sheet separating a filter compartment from a clean compartment within an enclosure is provided. The dust collector can include a filter located within the filter compartment and sealingly engaged with the tube sheet in alignment with an aperture through the tube sheet to an interior space of the filter. The dust collector also includes a cleaning system configured to perform a cleaning operation on the filter. The filter can include tag such that interaction with the tag products filter information associated with the filter. A controller of the dust collector can be configured to operate the cleaning system in accordance with a cleaning routine determined based at least in part on the filer information produced from the tag.

In accordance with another aspect, a method for a dust collector is provided. The method can include obtaining filter information associated with a filter installed in the dust collector. The method can further include selecting a cleaning routine for use with the filter based at least in part on the filter information. In addition, the method can include operating a cleaning system associated with the dust collector, to clean the filter, in accordance with the cleaning routine selected.

According to yet another aspect, a non-transitory, computer-readable storage medium can have computer-executable instructions stored thereon. The instructions, when executed, can configure a processor to obtain filter information corresponding to a filter installed in a dust collector. The filter information can be produced through interaction with a tag associated with the filter. The instructions can further configure the processor to select a cleaning routine for the filter based at least in part on the filter information corresponding to the filter. In addition, the instructions can configure the processor to initiate one or more cleaning cycles on the filter, with a cleaning system associated with the dust collector, in accordance with the cleaning routine selected.

These and other aspects of this invention will be evident when viewed in light of the drawings, detailed description and appended claims.

### BRIEF DESCRIPTION OF THE DRAWINGS

The invention may take physical form in certain parts and arrangements of parts, a preferred embodiment of which will be described in detail in the specification and illustrated in the accompanying drawings which form a part hereof, and wherein:
Fig. 1 illustrates an partial, cut-away perspective view of an exemplary, non-limiting embodiment of a dust collector according to one or more aspects;
Fig. 2 is a partial, cut-away side view of the dust collector of Fig. 1;
Fig. 3 illustrates an exemplary, non-limiting embodiment of a filter for use in the dust collector of Fig. 1 in accordance with one or more aspects;
Fig. 4 illustrates an exploded view of the filter shown in Fig. 3;
Fig. 5 is a schematic block diagram of an exemplary, non-limiting embodiment of a fume extraction and dust collection system implementing one or more aspects described herein;
Fig. 6 is a schematic block diagram of an exemplary, non-limiting embodiment of a control system in accordance with various aspects;
Fig. 7 is a flow diagram of an exemplary, non-limiting embodiment for operating a dust collector and cleaning system in accordance with one or more aspects;
Fig. 8 is a flow diagram of an exemplary, non-limiting embodiment for operating a cleaning system according to various aspects;
Fig. 9 is a flow diagram of an exemplary, non-limiting embodiment for customizing a cleaning routine for a filter according to one or more aspects; and
Fig. 10 is a flow diagram of an exemplary, non-limiting embodiment for facilitating filter replacement in accordance with various aspects.

### DETAILED DESCRIPTION

Embodiments of the invention relate systems and methods for providing custom filter cleaning routines within a fume extraction system. In particular, the custom cleaning routines are selected for use with air filters installed within a dust collector included as part of the fume extraction system. To provide customized cleaning, a tag can be associated with a filter for use with a dust collector. For instance, the tag can be attached to the filter. Interaction with the tag, via a corresponding reading device, can produce a filter identifier and other filter information. Based on the filter identifier and/or the other filter information, an appropriate cleaning routine for the filter can be selected by a control system. The control system thereafter operates the dust collector and the cleaning system in accordance with the selected routine.

According to one aspect, the cleaning system operates to dislodge contaminants coating an exterior surface of the filter. As utilized herein, the "exterior surface of the filter" refers to the filter surface exposed to the filter compartment (i.e. the dirty or contaminated air compartment) of the dust collector and an "interior surface of the filter" refers to an internal surface of the filter, which is exposed to the clean air compartment of the dust collector. In one example, the cleaning system can involve pulses of air directed to the filter to dislodge the contaminants. It is to be appreciated, however, that other techniques can be employed to dislodge debris such as a vibration or a shock.

Regardless of the technique employed by the cleaning system, a cleaning cycle is often triggered based on a pressure drop across the filter. For instance, as a filter becomes dirtier, the pressure drop across the filter increases due to extra effort required to draw air through the filter. In accordance with an aspect described herein, the cleaning routine (e.g. a trigger for or a frequency of cleaning cycles) can be custom to each filter.

In one example, the tag associated with the filter can provide at least a filter identifier to a control system of the dust collector. The tag can be a barcode, for instance, that can be read with a barcode scanner to produce the filter identifier. The control system can utilize the filter identifier to retrieve additional filter information corresponding to the filter. Based on the filter information and/or the filter identifier, the control system can select an appropriate cleaning routine for the filter.

In another example, the tag can be an RFID device electronically storing data such as the filter identifier and/or at least a portion of the additional filter information. The data stored on the RFID device can be retrieved by an RFID reader in proximity to the tag. The control system can utilize the stored data retrieved from the tag to obtain additional information in a database and to select the cleaning routine. With the additional storage capabilities of RFID devices, however, it is to be appreciated that the cleaning routine to be used for the filter can be specifically stored on the tag.

While exemplary implementations based on barcodes and RFID tags are provided above, it is to be appreciated that other automatic identification and data capture techniques can be utilized to enable custom cleaning routines. For example, the filter identifier or other information can be encoded on a magnetic stripe, an integrated circuit card (i.e. a smart card), a transponder, or with visual markings printed on the filter. An appropriate reader device, corresponding to the encoding technique employed, can be utilized to retrieve the encoded information to identify the filter and select the cleaning routine. For instance, a camera can capture an image of the visual markings and computer vision techniques are employed to recognize the markings.

In an aspect, the filter identifier encoded on the tag can specify a filter type. For instance, the filter type can refer to a type of filter media and/or a configuration of the filter (i.e. shape, size, etc.). Accordingly, a custom cleaning routine can be selected based on the filter type. In another aspect, the filter identifier can be a unique identifier particularly associated with a given filter and utilized as an index to query a data store for an associated cleaning routine and/or additional information associated with the filter by which to select a cleaning routine. The additional filter information can include a media type, a configuration, a manufacturing date, an installation date, a number of run hours, an expected use case of the system, an expected contaminant, a number of cleaning cycles executed, a time since last cleaning cycle, a pressure drop target, and/or a specified cleaning routine itself.

In yet another aspect, a cleaning routine for a filter can be configured or modified based on historical data. For instance, operational data can be collected during operation of the cleaning system and the fume extraction system. The operational data can relate to run times of the system, number of cleaning cycles executed, measured pressure drops across the filter, an average time between cleaning cycles, etc. According to an example, a pressure-based cleaning routine can be initially selected for a filter. Based on the operational data, the control system can modify the cleaning routine to proactively trigger cleaning cycles at a learned frequency and prior to detecting a pressure drop threshold. Thus, in heavily contaminated environment for example, the adjusted cleaning routines can facilitate reducing workloads of other components of the system in order to extend lifetimes of more expensive and less easily replaced parts.

Various embodiments will now be described with reference to the drawings, wherein like reference numerals are used to refer to like elements throughout. It is to be appreciated that the various drawings are not necessarily drawn to scale from one figure to another nor inside a given figure, and in particular that the size of the components are arbitrarily drawn for facilitating the understanding of the drawings. In the following description, for purposes of explanation, numerous specific details are set forth in order to provide a thorough understanding of the embodiments. It may be evident, however, that features described herein can be practiced without these specific details. Additionally, other embodiments are possible and the features described herein are capable of being practiced and carried out in ways other than as described. The terminology and phraseology used herein is employed for the purpose of promoting an understanding of the invention and should not be taken as limiting.

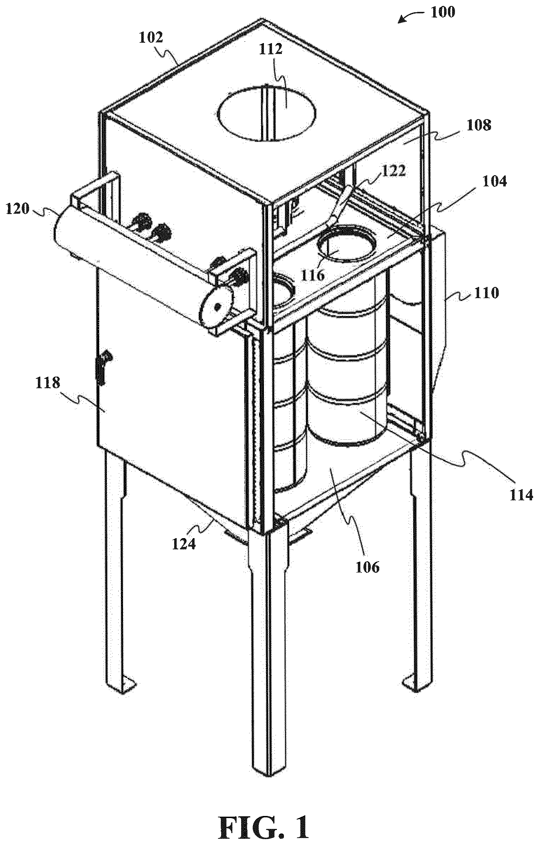

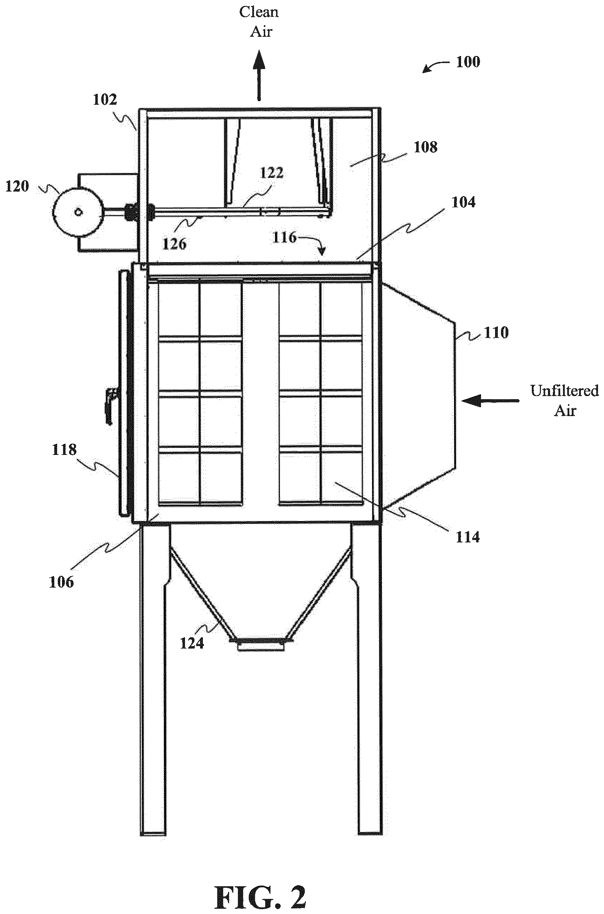

Turning initially to Figs. 1 and 2, an exemplary, non-limiting dust collector 100 is illustrated. Fig. 1 and 2 depict the dust collector 100 in partial cut-away with various panels or other features hidden to better illustrate one or more features. Dust collector 100 can be used within a fume extraction system that removes fumes and other contaminants from a space. In particular, dust collector 100 captures solid particles in extracted air prior to discharge of the air elsewhere.

As shown in Figs. 1 and 2, the dust collector 100 includes an enclosure 102 defining an internal volume. A tube sheet 104 separates the internal volume into a filter compartment 106 and a clean air compartment 108. Contaminated or unfiltered air enters the filter compartment 106 via intake 110. The unfiltered air can be drawn through intake 110 via a ventilation system (not shown), which creates a negative pressure environment. The unfiltered air interacts with one or more filters 114 installed within the filter compartment 106. The filters 114 captures solid particles entrained in the air as the air passes through the filter media. Clean air exits the filters 114 through interior surfaces thereof and enters the clean air compartment 108 via apertures 116 in the tube sheet 104, which are aligned with respective interior spaces of the filters 114. Clean air leaves the clean air compartment 108 of the dust collector 100 via an exhaust 112, which can be attached to duct work (not shown) to direct the air to a discharge location.

Filters 114 installed in the dust collector 100 are mounted to and sealingly engaged with the tube sheet on a filter compartment side thereof. Filters 114 can require periodic replacement and, thus, are removable components. The dust collector 100 includes a door 118, which provides access to the filter compartment 106 to enable replacement of filters 114. Filters 114 can undergo one or more cleaning cycles to increase an operational life prior to replacement.

An exemplary cleaning system for performing a cleaning operation on the filters 114 is shown in Figs. 1 and 2. The cleaning system can include a source of compressed air, such as cylinder 120, that delivers air via one or more pipes 122 to respective nozzles 126, which direct pulses of air through apertures 116 into the interior space of filters 114 to dislodge contaminants trapped on exterior surfaces of filters 114. In effect, the cleaning system shown in Figs. 1 and 2 performs a cleaning operation by forcing air through filters 114 in a direction opposite of the direction of air during normal operation of the dust collector 100. Dislodged contaminants fall into a hopper 124 that can empty its contents into a collection bin (not shown) for disposal.

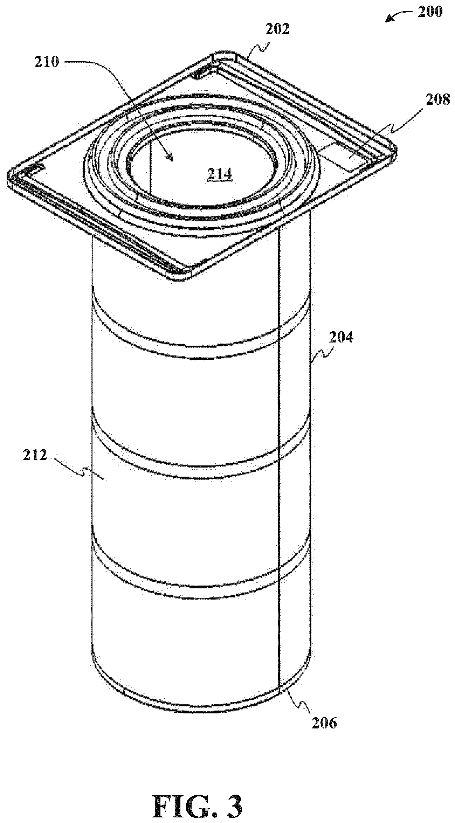

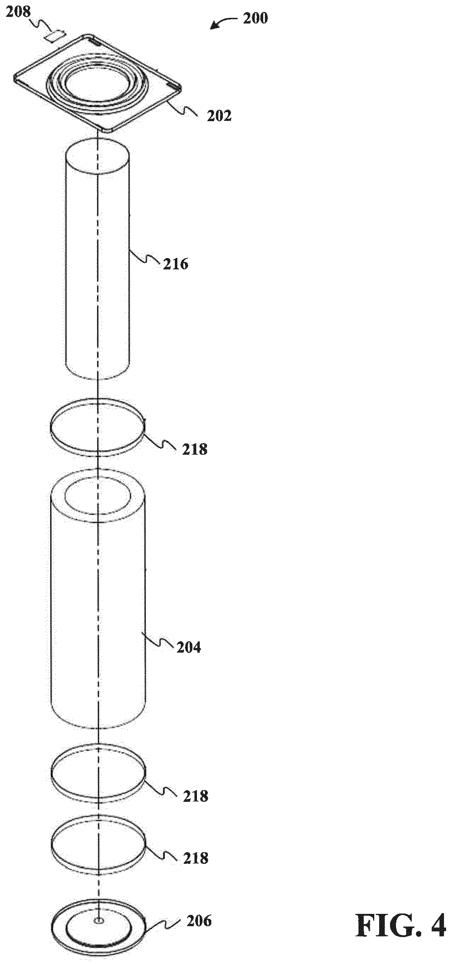

Referring now to Figs. 3 and 4, an exemplary filter 200 is depicted. According to example, filter 200 can be installed in dust collector 100 as filter 114. Filter 200 can include a filter flange 202 at a first end of the filter 200 and an end cap 206 at a second end of the filter 200. A media pack 204 extends between the filter flange 202 and the end cap 206. The flange 202 has a filtered air outlet 210, which aligns with aperture 116 when filter 200 is mounted within dust collector 100 to enable filtered air to pass into the clean air compartment 108. As shown, the flange 202 includes a gasket surrounding the filtered air outlet to sealingly engage with a tube sheet of a dust collector when installed.

Unfiltered air enters filter 200 via exterior surface 212 formed by media pack 204 and exits filter 200 within interior space 214. As the air moves across the media pack 204, solid particles entrained in the air are captured and remain lodged within the media pack 204. Depending on the size of contaminant particles, some contaminants may deposit on the exterior surface 212 and be more readily removed via cleaning operation.

As shown in Fig. 4, filter 200 can include an inner cage 216 arranged between the flange 202 and end cap 206 and also concentrically aligned with the media pack 204. The inner cage 216 can facilitate maintaining a shape of filter 200 in view of mechanical or pneumatic stresses. In addition, one or more bands 218 can be attached to the exterior surface 212 of media pack 204 to facilitate holding the filter 200 together.

According to an aspect, filter 200 can include a tag 208 bearing an indicia or storing data associated with filter 200. Tag 208 can be a RFID device, a barcode, or other tag associated with other automatic identification and data capture techniques. Interaction with tag 208, (e.g. reading the indicia or retrieving stored data) with a corresponding reading device can generate filter information (e.g., a filter identifier or other filter characteristics) usable by a control system to appropriately operate the dust collector or a cleaning system. For example, the filter information can be utilized to select or configure a cleaning routine for filter 200. Moreover, the tag 208 can be utilized to store a selected or configured cleaning routine and/or other historical data associated with filter 200. For instance, certain information (e.g., number of cleaning cycles, operational run time, etc.) can be stored to tag 208 so as to be portable with filter 200. Accordingly, if filter 200 is removed from one dust collector and installed in another system, the new system can retrieve the information directly from tag 208 and operate with knowledge of the prior use.

While shown affixed to flange 202, it is to be appreciated that tag 208 can be attached to filter 200 substantially any portion of filter 200. For visually encoded information (e.g. barcodes, QR codes, etc.), tag 208 can be placed within a line of sight. For other types, for example RFID tags, line of sight is not required for interaction and, thus, tag 208 can be placed in a protected location.

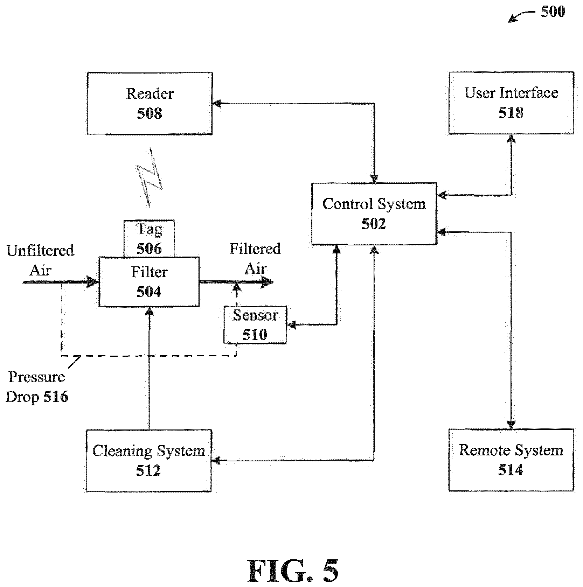

Turning now to Fig. 5, illustrated is a schematic block diagram of an exemplary, non-limiting fume extraction system 500. According to an aspect, though not shown in the simplified diagram of Fig. 5, system 500 can incorporate dust collector 100 having filters 114 or 200 installed as described above with respect to Figs. 1-4. System 500 includes a control system 502 configured to monitor various components of system 500, receive information from the components, and operate the components to execute fume extraction and dust collection for a space.

System 500 can include a filter 504, similar to filter 114 or 200, that processes unfiltered air drawn across a filter media to capture solid contaminants and outputs filtered air. A tag 506 can be associated with filter 504, which, through interaction with a reader 508, produces filter information associated with filter 504. Tag information (i.e. data directly obtained from the tag 506 by the reader 508) can include a filter identifier (e.g., a unique identifier for filter 504 or a filter type identifier) and, optionally, additional filter information depending on the capabilities of tag 506. For instance, tag 506 can be a bar code, QR code, or other visual marking. Accordingly, reader 508 can obtain a filter identifier encoded in the visual mark as tag information. The filter identifier can be employed by control system 502 to retrieve additional filter information associated with filter 502 from a database, for example. In another example, tag 506 can be an RFID tag capable of electronic data storage. As such, reader 508 can receive the filter identifier as well as additional filter information by interacting with (i.e. reading) the tag 506. By way of example and not limitation, filter information can include a filter media type, a filter configuration (i.e. shape, size), a manufacturing date, an installation date, a number of cleaning cycles performed on the filter, a pressure drop target, a run time or in-use time of the filter, a time since a last cleaning cycle, an expected contaminant to be filtered, an expected duration of continuous use, or the like.

Control system 502 can collect operational data during operation of the system 500 and store at least a portion of the operational data as filter information in associated with filter 504. The filter information can be stored in a database and/or recorded to tag 506 so as to be co-located and portable with filter 504.

Filter information, whether acquired directly from tag 506 or retrieved from a data store based on tag information, can be utilized by control system 502 to customize operation of system 500 in accordance with various characteristics of the filter 504 and/or the operating environment. For example, the control system 502 can select and/or customize a cleaning routine for filter 504 based in part on the filter information. In one aspect, the tag information acquired from the tag 506 can specify a particular cleaning routine for filter 504 to be selected and utilized by control system 502. The cleaning routine specifies one or more parameters associated with cleaning operations or cleaning cycles performed on filter 504 by a cleaning system 512. By way of example, a cleaning routine can specify a frequency of cleaning cycles, a runtime threshold before initiating a cleaning cycle, a pressure drop target that triggers a cleaning cycle, a duration of a cleaning cycle, a maximum elapsed time between cleaning cycles, or the like.

System 500 includes a sensor 510 to measure a pressure drop 516 across filter 504. Pressure data from sensor 510 can provide a component of operational data utilized to control system 500 and to map historical trends. The historical trends can be utilized to modify the cleaning routine selected for filter 504. For example, historical pressure data can indicate the system is experiencing a high average pressure, which can increase stresses on a ventilation system. In view of the this trend, the control system 502 can modify the cleaning routine to increase a frequency of cleaning cycles to reduce the average pressure. In addition, pressure drop 516 measured by sensor 510 can be monitored by control system 502 to trigger a cleaning operation by cleaning system 512. For instance, when pressure drop 516 reaches a threshold specified by a pressure-based cleaning routine selected for filter 504, the control system 502 can initiate a cleaning cycle on filter 504 with cleaning system 512.

Control system 502 can additionally be coupled to a remote system 514 and a user interface 518. The control system 502 can output operational data or other information to a user via user interface 518. In addition, the control system 502 can receive manual commands from the user via the user interface 518. For instance, the user can manually initiate a cleaning cycle or halt operation of system 500. Remote system 514 can be a user computing device, an inventory management system, and/or a purchasing system. Control system 502, according to an aspect, can communicate with the remote system 514 to notify users that filter 504 should be replaced, check for replacement filters in inventory, and/or automatically order replacement filters.

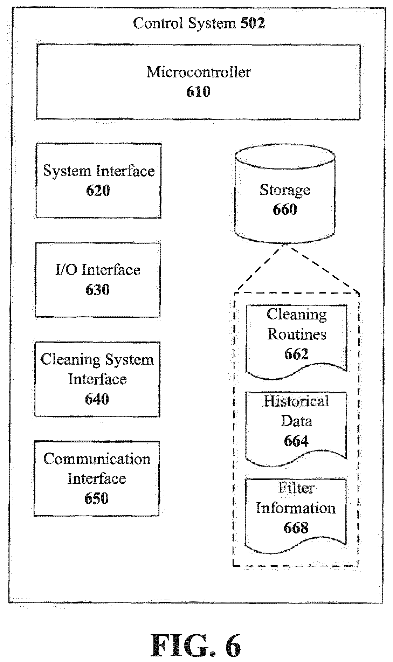

Fig. 6 illustrates a schematic block diagram of an exemplary, non-limiting embodiment for a control system 502 associated with the fume extraction and dust collection system 500 of Fig. 5. As shown in Fig. 6, control system 502 includes a microcontroller 610 having a processor configured to execute computer-executable instructions stored on a non-transitory, computer-readable storage medium (e.g. a ROM) associated with the processor and/or on other associated media such as storage 660. Control system 502 also includes various interfaces to couple the control system 502 to other devices and components to implement aspects described herein. In particular, control system 502 can include a system interface 620 to couple to system components associated with conventional operations of a fume extraction system, I/O interface 630 to couple to a user interface (e.g., user interface 518) and other input devices (e.g. sensor 510), cleaning interface 640 to couple to components of cleaning system 512 (e.g., valves). By way of example, these interfaces can include wired or wireless interfaces such as, but not limited to, paths on a circuit board, a USB interface, a serial interface, a WiFi interface, a short-range RF interface (Bluetooth), an infrared interface, a near-field communication (NFC) interface, etc.

Control system 502 also includes a communication interface 650 to couple control system 502 to various remote systems (e.g. user computing devices, inventory management systems, purchasing systems, etc.) Communication interface 650 can be a wired or wireless interface including, but not limited, a WiFi interface, an Ethernet interface, a fiber optic interface, a cellular radio interface, a satellite interface, etc. In addition, control system 502 can include storage 660 that includes cleaning routines 662 selectable or customizable for filters installed in system 500, historical data 664 or operational data monitored during operation of system 500, and filter information 668 recorded for and/or acquired from filters in system 500.

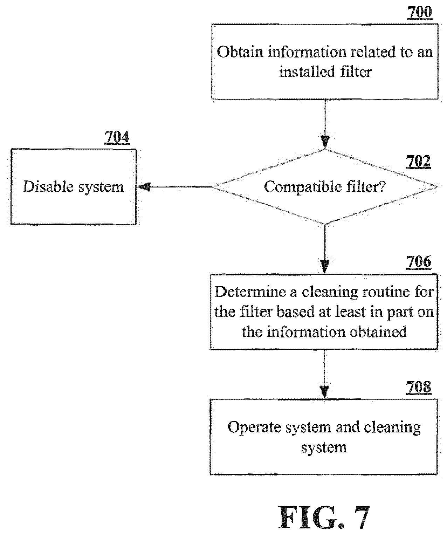

Turning now to Figs. 7-10, various methodologies are described in connection with the illustrated flow charts. The methodologies described can be performed by a controller (e.g. control system 502) of a fume extraction and dust collector system to implement custom cleaning routines for filters. Referring initially to Fig. 7, illustrated is a flow chart of a method for operating a dust collector and cleaning system. At 700, information is obtained from a filter installed in the system. The information can be acquired from a tag associated with or attached to the filter. At 702, a determination is made as to whether the installed filter is compatible with the system. If not, the controller can disable the system at 704. For instance, the information obtained from the filter can indicate a filter type not suitable for use with the system. In another example, the filter can be deemed incompatible if the filter does not have a tag associated therewith.

If the filter is determined to be compatible, then the method transitions to 706 where a cleaning routine is determined for the filter based at least in part on the information obtained. For example, the cleaning routine can be selected based on a filter media type specified by the obtained information. At 708, the controller operates the system and cleaning system in accordance with the selected cleaning routine.

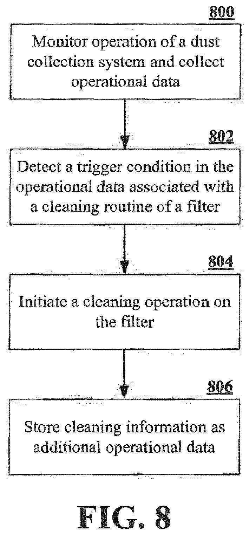

Fig. 8 illustrates a flow chart of an exemplary embodiment for operating the system in accordance with selected cleaning routine. At 800, operation of the dust collection system is monitored and operational data is collected. Operational data can be analyzed to model historical trends of the system. In addition, operational data can be evaluated, at 802, to identify trigger conditions associated with a cleaning routine of a filter. For example, the cleaning routine can specify a pressure drop threshold or a runtime threshold. When the operational data indicates that the threshold is reached, a cleaning cycle on the filter can be initiated at 804. At 806, cleaning information (e.g. increment a cycle count for the filter, a time of execution of the cleaning cycle, a pressure drop at cleaning, etc.) can be recorded as additional operational or historical data.

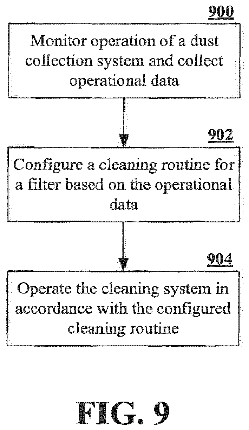

Turning now to Fig. 9, illustrated is a flow chart for an exemplary embodiment for customizing a cleaning routine for a filter. At 900, operation of the dust collection system is monitored and operational data is collected. Operational data can be analyzed to model historical trends of the system. At 902, a cleaning routine is configured for a filter based on the operational data and/or the historical trends identified. For instance, operational data can reveal a frequency of cleaning cycles for a pressure-based cleaning routine. Based on the frequency, a new cleaning routine can be configured for the filter to proactively trigger cleaning cycles prior to reaching a pressure drop threshold. For instance, the new cleaning routine can be time-based and configured based on the frequency identified through evaluation of historical trends. Thus, improved cleaning routines can be learned that reduce strain on components of the system.

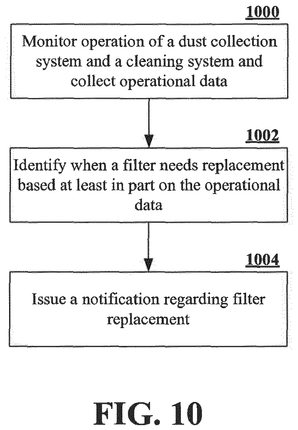

Fig. 10 illustrates a flow chart for an exemplary embodiment that facilitates filter replacement. At 1000, operation of the dust collection system and the cleaning system is monitored and operational data is collected. At 1002, it is identified whether a filter needs replacement based at least in part on the operational data or other filter information associated with the filter. For example, a replacement threshold can be predetermined and specified as a number of cleaning cycles, a maximum operational runtime, an age since manufacture or installation, etc. At 1004, notification is issued regarding filter replacement. The notification can be transmitted to a user's computing device, an inventory management system, or a purchasing system to effect automated reorder of filters.

In accordance with the foregoing, in one embodiment, a dust collector is provided that includes a tube sheet separating a filter compartment from a clean air compartment within an enclosure. The dust collector further includes a filter located within the filter compartment and sealingly engaged with the tube sheet in alignment with an aperture through the tube sheet to an interior space of the filter. The dust collector can further include a cleaning system configured to perform a cleaning operation on the filter. The filter can be associated with a tag, wherein interaction with the tag by a corresponding reading device produces filter information related to the filter. In addition, the dust collector can include a controller configured to operate the cleaning system in accordance with a cleaning routine determined based at least in part on the filter information produced from the tag.

In one example, the tag includes a filter identifier. For instance, the tag can be a barcode bearing the filter identifier and the dust collector can include a scanner to interact with the barcode to retrieve the filter identifier. The controller can obtain the filter information associated with the filter based at least in part on the filter identifier. In another example, the tag is an RFID device storing the filter identifier and the dust collector further includes an RFID reader to interact with the RFID device to retrieve the filter identifier. The RFID device can further store at least a portion of the filter information. According to various examples, the filter information can include one or more of a filter media type, an installation date, a number of cleaning cycles, a pressure drop, a time since last cycle, a runtime, an expected use scenario, expected contaminants, or a manufacturing date. In addition, the filter information can include the cleaning routine to be utilized for the filter.

The cleaning system can include a source of compressed air and a delivery system to controllably direct compressed air from the clean air compartment side of the tube sheet, through the aperture in the tube sheet, and into the interior space of the filter. The controller can be further configured to collect operational data during operation of the dust collector and the cleaning system. The controller can record at least a portion of the operational data as filter information. The controller can adjust the cleaning routine for the filter based at least in part on the operational data.

According to another aspect, a method is described. The method can include obtaining filter information associated with a filter installed in the dust collector. The method can further include selecting a cleaning routine for use with the filter based at least in part on the filter information. In addition, the method can include operating a cleaning system associated with the dust collector, to clean the filter, in accordance with the cleaning routine selected.

In one example, the method can also include reading at least a filter identifier corresponding to the filter from a tag associated with the filter and retrieving at least a portion of the filter information based on the filter identifier from a data store. When the tag is an RFID device, the method can also include retrieving filter information from the RFID device. In another example, the method can include collecting operational data during operation of the dust collector and the cleaning system and modifying the cleaning routing based at least in part on the operational data.

In yet another aspect, a non-transitory, computer-readable storage medium is described having stored thereon computer-executable instructions. The instructions, when executed, configure a processor to obtain filter information corresponding to a filter installed in a dust collector, wherein the filter information is produced through interaction with a tag associated with the filter; select a cleaning routine for the filter based at least in part on the filter information corresponding to the filter; and initiate one or more cleaning cycles on the filter, with a cleaning system associated with the dust collector, in accordance with the cleaning routine selected. Additional instructions can be stored that configure the processor to collect operational data during operation of the dust collector and the cleaning system, analyze the operational data to determine adjustments to the cleaning routine, configure the cleaning routine in view of the adjustments determined, and initiate one more cleaning cycles on the filter in accordance with the adjusted cleaning routine. In addition, instructions can be stored that also configure the processor to send a notification to a user to replace the filter and send a request to a purchasing system to order a replacement filter.

The above examples are merely illustrative of several possible embodiments of various aspects of the present invention, wherein equivalent alterations and/or modifications will occur to others skilled in the art upon reading and understanding this specification and the annexed drawings. In particular regard to the various functions performed by the above described components (assemblies, devices, systems, circuits, and the like), the terms (including a reference to a "means") used to describe such components are intended to correspond, unless otherwise indicated, to any component, such as hardware, software, or combinations thereof, which performs the specified function of the described component

(e.g., that is functionally equivalent), even though not structurally equivalent to the disclosed structure which performs the function in the illustrated implementations of the invention. In addition although a particular feature of the invention may have been disclosed with respect to only one of several implementations, such feature may be combined with one or more other features of the other implementations as may be desired and advantageous for any given or particular application. Also, to the extent that the terms "including", "includes", "having", "has", "with", or variants thereof are used in the detailed description and/or in the claims, such terms are intended to be inclusive in a manner similar to the term "comprising."

This written description uses examples to disclose the invention, including the best mode, and also to enable one of ordinary skill in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that are not different from the literal language of the claims, or if they include equivalent structural elements with insubstantial differences from the literal language of the claims.

The best mode for carrying out the invention has been described for purposes of illustrating the best mode known to the applicant at the time. The examples are illustrative only and not meant to limit the invention, as measured by the scope and merit of the claims. The invention has been described with reference to preferred and alternate embodiments. Obviously, modifications and alterations will occur to others upon the reading and understanding of the specification. It is intended to include all such modifications and alterations insofar as they come within the scope of the appended claims or the equivalents thereof.

**REFERENCE NUMBERS**

| | | | |
|---|---|---|---|
| 100 | dust collector | 510 | sensor |
| 102 | enclosure | 512 | cleaning system |
| 104 | tube sheet | 514 | remote system |
| 106 | filter compartment | 516 | pressure drop |
| 108 | air compartment | 518 | user interface |
| 110 | intake | 610 | microcontroller |
| 112 | exhaust | 620 | system interface |
| 114 | filter | 630 | I/O interface |
| 116 | aperture | 640 | cleaning interface |
| 118 | door | 650 | communication interface |
| 120 | cylinder | 660 | storage |
| 122 | pipe | 662 | cleaning routine |
| 124 | hopper | 664 | historical data |
| 126 | nozzle | 668 | filter information |
| 200 | filter | 700 | (obtain) information |
| 202 | filter flange | 702 | (make) determination |
| 204 | media pack | 704 | disable system |
| 206 | end cap | 706 | determine cleaning routine |
| 208 | tag | 708 | operate systems |
| 210 | air outlet | 800 | monitor operation |
| 212 | exterior surface | 802 | (detect) trigger |
| 214 | interior space | 804 | (initiate) cleaning operation |
| 216 | inner cage | 806 | (store) cleaning information |
| 218 | band | 900 | monitor operation |
| 500 | fume extraction system | 902 | (configure) cleaning routine |
| 502 | control system | 1000 | monitor operation |
| 504 | filter | 1002 | (identify) filter replacement |
| 506 | tag | 1004 | (issue) notification |
| 508 | reader | | |

## Claims

1. A dust collector (100) having a tube sheet (104) separating a filter compartment (106) from a clean air compartment (108) within an enclosure, comprising:
a filter (114, 200) located within the filter compartment (106) and sealingly engaged with the tube sheet (104) in alignment with an aperture (116) through the tube sheet (104) to an interior space of the filter (114, 200);
a cleaning system (512) configured to perform a cleaning operation on the filter (114, 200);
a tag associated (208, 506) with the filter (114, 200), wherein interaction with the tag (208, 506) produces filter information associated with the filter (114, 200); and
a controller configured to operate the cleaning system (512) in accordance with a cleaning routine determined based at least in part on the filter information produced from the tag (208, 506).

2. The dust collector (100) of claim 1, wherein the tag (208, 506) includes a filter identifier.

3. The dust collector (100) of claim 1 or 2, wherein the tag (208, 506) is a barcode bearing the filter identifier and the dust collector (100) further comprises a scanner to interact with the barcode to retrieve the filter identifier, and/or
wherein the tag (208, 506) is an RFID device storing the filter identifier, and the dust collector (100) further comprising an RFID reader to interact with the RFID device to retrieve the filter identifier,
wherein, preferably, the RFID device further stores at least a portion of the filter information.

4. The dust collector (100) of any of the claims 1 to 3, wherein the controller obtains the filter information associated with the filter (114, 200) based at least in part on the filter identifier.

5. The dust (100) collector of any of the claims 1 to 4, wherein the filter information includes one or more of a filter media type, an installation date, a number of cleaning cycles, a pressure drop, a time since last cycle, a runtime, an expected use scenario, expected contaminants, or a manufacturing date.

6. The dust collector (100) of any of the claims 1 to 5, wherein the filter information includes the cleaning routine to be utilized for the filter (114, 200).

7. The dust collector (100) of any of the claims 1 to 6, wherein the cleaning system (512) comprises a source of compressed air and a delivery system to controllably direct compressed air from the clean air compartment side of tube sheet, through the aperture in the tube sheet, and into the interior space of the filter (114, 200).

8. The dust collector (100) of any of the claims 1 to 7, wherein the controller is further configured to collect operational data during operation of the dust collector and the cleaning system (512),
wherein, preferably, the controller is further configured to record at least a portion of the operational data as filter information, and/or
wherein, preferably, the controller is further configured to adjust the cleaning routine (662) for the filter based at least in part on the operational data, and/or wherein, preferably, the controller stores the adjusted cleaning routine (662) for the filter (114, 200) to the tag associated with the filter (114, 200).

9. A method for a dust collector, comprising:
obtaining filter information associated with a filter installed in the dust collector;
selecting a cleaning routine for use with the filter based at least in part on the filter information; and
operating a cleaning system associated with the dust collector, to clean the filter, in accordance with the cleaning routine selected.

10. The method of claim 9, wherein obtaining the filter information comprises:
reading at least a filter identifier corresponding to the filter from a tag associated with the filter; and
retrieving at least a portion of the filter information based on the filter identifier from a data store.

11. The method of claim 9 or 10, wherein the tag is an RFID device and the method comprises retrieving filter information from the RFID device.

12. The method of any of the claims 9 to 11, further comprising:
collecting operational data during operation of the dust collector and the cleaning system; and
modifying the cleaning routing based at least in part on the operational data.

13. A non-transitory, computer-readable storage medium (660) having stored thereon computer-executable instructions that, when executed, configure a processor to:
obtain filter information corresponding to a filter (114, 200) installed in a dust collector (100), preferably in a dust collector and of the claims 1 to 8, wherein the filter information is produced through interaction with a tag (208, 506) associated with the filter (114, 200);
select a cleaning routine (602) for the filter (114, 200) based at least in part on the filter information corresponding to the filter (114, 200); and
initiate one or more cleaning cycles on the filter (114, 200), with a cleaning system (512) associated with the dust collector (100), in accordance with the cleaning routine (662) selected.

14. The non-transitory, computer-readable storage medium (600) of claim 13, further storing instructions that configure the processor to:
collect operational data during operation of the dust collector (100) and the cleaning system (512);
analyze the operational data to determine adjustments to the cleaning routine (662);
configure the cleaning routine (662) in view of the adjustments determined; and
initiate one more cleaning cycles on the filter (114, 200) in accordance with the adjusted cleaning routine (662).

15. The non-transitory, computer-readable storage medium (800) of claim 13 or 14, further storing instructions that configure the processor to at least one of:
send a notification to a user to replace the filter (114, 200); or
send a request to a purchasing system to order a replacement filter.
